(19) Europäisches Patentamt
European Patent Office
Office européen des brevets

(11) Veröffentlichungsnummer: 0 350 664 B1

(12) **EUROPÄISCHE PATENTSCHRIFT**

(45) Veröffentlichungstag der Patentschrift: **10.08.94**

(51) Int. Cl.[5]: **C08F 8/30**, C08F 8/00, C09D 125/02, C09D 133/06

(21) Anmeldenummer: **89111159.3**

(22) Anmeldetag: **20.06.89**

(54) **Modifizierte Copolymerisate enthaltende Bindemittel und ihre Verwendung in Beschichtungsmitteln und Dichtmassen.**

(30) Priorität: **03.07.88 DE 3822498**

(43) Veröffentlichungstag der Anmeldung:
**17.01.90 Patentblatt 90/03**

(45) Bekanntmachung des Hinweises auf die Patenterteilung:
**10.08.94 Patentblatt 94/32**

(84) Benannte Vertragsstaaten:
**AT BE CH DE ES FR GB IT LI NL SE**

(56) Entgegenhaltungen:
**EP-A- 0 012 269**
**EP-A- 0 040 288**
**EP-A- 0 273 795**
**DE-A- 2 336 517**
**DE-A- 2 635 123**

(73) Patentinhaber: **BAYER AG**

**D-51368 Leverkusen(DE)**

(72) Erfinder: **Wamprecht, Christian, Dr.**
**Bahnhofstrasse 51**
**D-4040 Neuss 22(DE)**
Erfinder: **Blum, Harald, Dr.**
**Auf dem Westkamp 1**
**D-4175 Wachtendonk(DE)**
Erfinder: **Pedain, Josef, Dr.**
**Haferkamp 6**
**D-5000 Köln 80(DE)**
Erfinder: **Höhlein, Peter, Dr.**
**Windmühlenweg 3e**
**D-4152 Kempen 3(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 350 664 B1

## Beschreibung

Die vorliegende Erfindung betrifft Bindemittel, die sowohl Copolymerisate mit chemisch eingebauten intramolekularen Säureanhydridgruppen und chemisch eingebauten olefinisch ungesättigten (Meth)-Acrylatgruppen als auch organische Polyamine mit blockierten Aminogruppen enthalten und deren Verwendung in unter dem Einfluß von Feuchtigkeit aushärtbaren Beschichtungsmitteln und Dichtmassen.

Die Verwendung von Kombinationen aus organischen Verbindungen mit mindestens zwei intramolekularen Carbonsäure-anhydridgruppen pro Molekül, insbesondere von bernsteinsäureanhydridhaltigen Copolymerisaten und Polyhydroxyl-verbindungen als Bindemittel für Lacke und Beschichtungsmassen ist aus der EP-A-48 128 bereits bekannt.

Der Gedanke, das Prinzip dieser Veröffentlichung auf die Umsetzung von Aminen mit Anhydriden zu übertragen, scheitert jedoch an der Tatsache, daß die Umsetzung von Aminen mit Anhydriden eine bereits bei Raumtemperatur sehr rasch ablaufende Reaktion darstellt, die unter Anhydridspaltung zu vernetzten Produkten führt. Die daraus resultierenden extrem kurzen Standzeiten verhindern bisher die gemeinsame Verwendung von Polyanhydriden und Polyaminen in Beschichtungssystemen.

Eine Lösungsmöglichkeit wird in der DE-OS 2 853 477 aufgezeigt. Dort werden Mischungen aus blockierten Polyaminen und aus Polyanhydriden beschrieben, die gute Standzeiten aufweisen, jedoch bei Zugabe von Wasser zu vernetzten Produkten aushärten. Als geeignete blockierte Polyamine werden Ketimine bzw. Aldimine beschrieben, die durch Umsetzung von Polyaminen mit Ketonen bzw. Aldehyden erhalten werden.

Als Polyanhydride werden Verbindungen mit wenigstens zwei cyclischen Carbonsäureanhydridgruppen im Molekül, insbesondere Umsetzungsprodukte von Polyolen mit cyclischen Dianhydriden bei einem Hydroxyl-Anhydridgruppenverhältnis von 1:2, oder Copolymerisate eines ungesättigten cyclischen Anhydrids mit mehrfach ungesättigten Verbindungen oder $\alpha$-Olefinen genannt.

Die bei der Herstellung der Copolymerisate einzusetzenden olefinisch ungesättigten Verbindungen werden in der allgemeinen Beschreibung der DE-OS 2 853 477 nur sehr pauschal abgehandelt, insbesondere fehlt jeglicher Hinweis bezüglich der Mengenverhältnisse der einzelnen Monomere, die bei der Herstellung der Copolymerisate zum Einsatz gelangen sollen. Die konkrete Offenbarung der Ausführungsbeispiele beschränkt sich auf Copolymerisate aus Butadienöl und Maleinsäureanhydrid im Verhältnis 1:1 und auf Copolymerisate von Holzöl mit Maleinsäureanhydrid. Diese Copolymerisate sind jedoch mit Nachteilen behaftet, da ihre Kombination mit Bisketiminen bzw. Bisaldiminen letztendlich zu stark verfärbten Produkten führt. Im übrigen führen Beschichtungsmittel, die als Bindemittelkomponente ungesättigte Öle wie Butadienöl oder Holzöl enthalten, zu Überzügen, die leicht zur Versprödung neigen und nicht wetterbeständig sind.

Außerdem muß, wie den Ausführungsbeispielen der DE-OS 2 853 477 zu entnehmen, bei der Verarbeitung der dort konkret beschriebenen Bindemittel Dimethylformamid als Lösungsmittel eingesetzt werden, wobei außerdem nicht akzeptable Feststoffgehalte von lediglich ca. 20 % zur Anwendung gelangen.

Eine weitere Möglichkeit, die Standzeiten zu verlängern, besteht in der Verwendung von Oxazolanen anstelle der Amine.

Wasserhärtbare Zusammensetzungen aus Oxazolanen und Polyanhydriden sind im Prinzip aus der DE-OS 2 610 406 bekannt. Dort werden Oxazolane mit Polyanhydriden für wasserhärtbare Dicht- und Klebstoffmassen kombiniert.

Als geeignete Polyanhydride werden Umsetzungsprodukte von mehrfach ungesättigten Fettsäuren mit Maleinsäureanhydrid und Polyanhydride aus $C_3$-$C_6$-Alkyl-(meth)acrylat und Maleinsäureanhydrid, insbesondere aus Butylacrylat und Maleinsäureanhydrid, beschrieben.

Die in der DE-OS 2 610 406 konkret beschriebenen Systeme sind bezüglich ihrer Eignung zur Herstellung hochwertiger, farbloser Lackfilme hoher Härte und guter Lösungsmittel- und Chemikalienbeständigkeit noch stark verbesserungsbedürftig. Dies gilt sowohl für die in den Ausführungsbeispielen beschriebenen Systeme auf Basis von Copolymerisaten aus Maleinsäureanhydrid und Butylacrylat als auch für Systeme auf Basis von Umsetzungsprodukten von Maleinsäureanhydrid mit mehrfach ungesättigten Fettsäureestern, die zu vergilbenden Endprodukten führen.

Die Verwendung von Verbindungen, die ungesättigte (Meth)Acrylatgruppen aufweisen, in Kombination mit Polyaminen für Lacke und Beschichtungssysteme ist z.B. aus den EP-A 34720, 40288, 165 580, 167 042 und 203 296 bekannt.

Die Reaktivität solcher bindemittelkombinationen ist jedoch verbesserungsbedürftig. Insbesondere bei der Aushärtung bei Raumtemperatur ist auch bei Zugabe ausgewählter Katalysatorsystemen die Vernetzung noch nicht ausreichend oder erfordert zumindest sehr lange Reaktionszeiten.

Es war die der Erfindung zugrundeliegende Aufgabe, neue Bindemittelkombinationen zur Verfügung zu stellen, die zur Herstellung von hochwertigen, gegebenenfalls unter dem Einfluß von Luftfeuchtigkeit aushärtenden Systemen mit ausreichender Standzeit geeignet sind. Die erhaltenen Überzüge sollen klar, farblos, vergilbungsbeständig und lösungsmittelfest sein.

Diese Aufgabe konnte durch die Bereitstellung der nachstehend näher beschriebenen, modifizierten Copolymerisate bzw. der die modifizierten Copolymerisate und blockierte Polyamine der nachstehend näher beschriebenen Art enthaltenden Bindemittelkombinationen gelöst werden.

In den nachstehend näher beschriebenen erfindungsgemäßen Bindemitteln bzw. Bindemittelkombinationen liegen neben A) Copolymerisate mit chemisch eingebauten intramolekularen Carbonsäureanhydridgruppen und chemisch eingebauten (Meth)Acrylatgruppen B) organische Polyamine mit blockierten Aminogruppen vor. Bei der nach einem "double-cure" -Mechanismus ablaufenden Aushärtung der Bindemittel kommt es neben der Reaktion zwischen den Anhydridgruppen mit den (durch den Einfluß von Feuchtigkeit freigesetzten) Aminogruppen, die sehr schnell abläuft, auch zu einer Additionsreaktion zwischen den ungesättigten (Meth)Acrylatgruppen und den (unter dem Einfluß von Feuchtigkeit freigesetzten) Aminogruppen. Evtl. zusätzlich in den Bindemitteln vorliegende Hydroxylgruppen können sich an die Anhydridgruppen addieren, so daß umfangreiche Vernetzungsmöglichkeiten bestehen und dadurch hohe Vernetzungsdichten erzielt werden. Es können somit auch hohe Anforderungen bezüglich Lösungsmittel- und Chemikalienfestigkeit erfüllt werden.

Gegenstand der Erfindung sind Bindemittel für unter dem Einfluß von Feuchtigkeit aushärtbare Beschichtungsmittel oder Dichtmassen, dadurch gekennzeichnet, daß es

A) 30 bis 99 Gew.-Teile einer Copolymerisat-Komponente, bestehend aus mindestens einem modifizierten Copolymerisat mit einem als Gewichtsmittel bestimmten Molekulargewicht von 1500 bis 75 000 von olefinisch ungesättigten Verbindungen, welches als gegenüber Aminogruppen reaktionsfähige Gruppen sowohl

(i) intramolekulare Carbonsäureanhydridgruppen als auch

(ii) olefinisch ungesättigte (Meth)Acrylatgruppen

in chemisch gebundener Form enthält, wobei das Anhydridäquivalentgewicht bei 392 bis 9800 und das (Meth)Acrylat-Äquivalentgewicht bei 284 bis 7100 liegt,

B) 1 bis 70 Gew.-Teile einer Polyaminkomponente, bestehend aus mindestens einem organischen Polyamin mit blockierten Aminogruppen, welche mit Wasser unter Freisetzung von primären oder sekundären Aminogruppen reagieren,

sowie gebenenfalls

C) Hilfs- und Zusatzmittel

enthält, wobei Art und Mengenverhältnisse der Komponenten A) und B) im übrigen so ausgewählt sind, daß auf jede blockierte Aminogruppe der Komponente B) insgesamt 0,2 bis 8 Anhydrid- und ungesättigte (Meth)Acrylatgruppen der Komponente A) entfallen.

Gegenstand der Erfindung ist insbesondere ein derartiges Bindemittel, welches dadurch gekennzeichnet ist, daß das in der Komponente A) vorliegende Copolymerisat hergestellt worden ist, indem man

in einem ersten Reaktionsschritt

a) 5 bis 30 Gew.-Teile copolymerisierbare, anhydridfunktionelle Monomere

und

b) 70 bis 95 Gew.-Teile sonstige copolymerisierbare Monomere der allgemeinen Formeln (I), (II), (III)

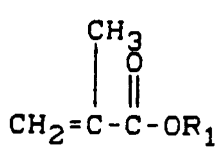
(I)

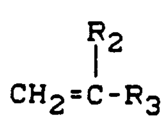
(II)

und/oder

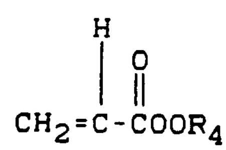
(III)

wobei

$R_1$ für einen linearen oder verzweigten aliphatischen Kohlenwasserstoffrest mit 1 bis 18 Kohlenstoffatomen steht,

$R_2$ für Wasserstoff, eine Methyl-, Ethyl-, Chlor- oder Fluorgruppe steht,

$R_3$ für einen aromatischen Kohlenwasserstoffrest mit 6 bis 12 Kohlenstoffatomen (hierunter sollen

auch aliphatische Substituenten aufweisende aromatische Reste verstanden werden), eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff, gegebenenfalls Etherbrücken aufweisende, Alkylsubstituenten mit 1 bis 6 Kohlenstoffatomen tragen, steht, und

$R_4$ bezüglich seiner Bedeutung der für $R_1$ gemachten Definition entspricht, jedoch mit $R_1$ nicht identisch sein muß,

durch radikalisch initiierte Copolymerisation in ein anhydridfunktionelles Copolymerisat überführt und in einem zweiten Reaktionsschritt das so erhaltene Copolymerisat durch Reaktion mit, bezogen auf die einpolymerisierten Anhydridgruppen unteräquivalenten Menge an hydroxyl- oder aminofunktionellen (Meth)Acrylsäureestern modifiziert.

Copolymerisate, die gleichzeitig chemisch eingebaute Carbonsäureanhydridgruppen und chemisch eingebaute olefinisch ungesättigte (Meth)Acrylatgruppen aufweisen, können auch gemäß DE-OS 2 635 123 entstehen, falls nämlich die zunächst hergestellten Anhydridgruppen aufweisenden Copolymerisate nur mit unterschüssigen Mengen an Hydroxyalkl-(meth)acrylaten zur Reaktion gebracht werden, was jedoch gemäß der Lehre dieser Vorveröffentlichung keineswegs bevorzugt ist, da die Kombination der modifizierten Copolymerisate mit blockierten Aminen der Art der erfindungsgemäßen Komponente B) im Sinne des oben diskutierten "double-cure"-Mechanismus überhaupt nicht in Betracht gezogen wird. Dementsprechend wird in der zitierten Vorveröffentlichung auch empfohlen, bei der genannten Modifizierungsreaktion die Mengenverhältnisse der Reaktionspartner vorzugsweise so zu wählen, daß die Anhydridgruppen vollständig verestert werden.

Gegenstand der Erfindung ist schließlich auch die Verwendung dieser Bindemittel als oder in, unter dem Einfluß von Feuchtigkeit aushärtbaren, Beschichtungsmitteln und Dichtmassen.

Die erfindungsgemäßen, modifizierten Copolymerisate enthalten sowohl intramolekulare Carbonsäureanhydridgruppen als auch olefinisch ungesättigte (Meth)Acrylatgruppen in chemisch gebundener Form und weisen ein als Gewichtsmittel bestimmtes, nach der Methode der Gelpermeationschromatographie ermittelbares Molekulargewicht von 1500 bis 75 000, vorzugsweise 3000 bis 50 000 und besonders bevorzugt von 3000 bis 30 000 auf. Das Anhydridäquivalentgewicht (Menge in "g" die 1 Mol an chemisch eingebauten, intramolekularen Carbonsäureanhydridgruppen enthält) liegt bei 392 bis 9800, vorzugsweise 784 bis 4900. Das (Meth)Acrylat-Äquivalentgewicht (Menge in "g" die insgesamt 1 Mol an chemisch eingebauten Acrylat- und/oder Methacrylatgruppen enthält) liegt bei 284 bis 7100, vorzugsweise 568 bis 3900.

Die Herstellung der modifizierten Copolymerisate erfolgt in einer Zweistufen-Reaktion, wobei in der ersten Reaktionsstufe zunächst ein intramolekulare Carbonsäureanhydridgruppen aufweisendes Copolymerisat A') hergestellt wird, welches anschließend in der zweiten Stufe durch Umsetzung mit hydroxyl- oder aminofunktionellen (Meth)Acrylsäureestern in die erfindungsgemäßen modifizierten Copolymerisate A) überführt wird.

Zur Herstellung der Copolymerisate A') wird vorzugsweise ein Monomerengemisch der bereits oben genannten Zusammensetzung verwendet.

Typische Beispiele für Monomere a) sind z.B. Itaconsäureanhydrid, Maleinsäureanhydrid, wobei Maleinsäureanhydrid bevorzugt ist.

Unter den Monomeren b) sind insbesondere solche der genannten allgemeinen Formeln bevorzugt, für welche

$R_1$ für einen linearen oder verzweigten aliphatischen Kohlenwasserstoffrest mit 1 bis 8 Kohlenstoffatomen steht,

$R_2$ für Wasserstoff oder eine Methylgruppe steht,

$R_3$ für einen aromatischen Kohlenwasserstoffrest mit 6 bis 12 Kohlenstoffatomen (hierunter sollen auch aliphatische Substituenten aufweisende aromatische Reste verstanden werden), eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff einen, gegebenenfalls Etherbrücken aufweisenden, Alkylsubstituenten mit 1 bis 6 Kohlenstoffatomen trägt, steht, und

$R_4$ bezüglich seiner Bedeutung der zuletzt für $R_1$ gemachten Definition entspricht.

Typische Beispiele für geeignete bzw. bevorzugte Reste $R_1$ bzw. $R_4$ sind Methyl-, Ethyl-, n-Propyl, Isopropyl-, n-Butyl-, Isobutyl-, n-Pentyl-, n-Hexyl-, 2-Ethylhexyl-, n-Octyl-, n-Decyl- oder n-Dodecylreste.

Typische Beispiele für geeignete bzw. bevorzugte Reste $R_2$ sind Wasserstoff-, Methyl-, Ethyl-, Chlor- oder Fluorreste.

Typische Beispiele für geeignete bzw. bevorzugte Reste $R_3$ sind aliphatische Reste der soeben für $R_1$ beispielhaft genannten Art mit Ausnahme von Methyl und außerdem Phenyl-, Cyclohexyl-, 2-, 3- und 4-Methylphenyl-, Propoxy-, n-Butoxy-, Acetyl-, Propionyl-, n-Butyryl-oder N-Methoxymethyl-aminocarbonyl-Reste.

Besonders bevorzugte Komponenten zur Herstellung der Copolymerisate A') sind solche, den obengemachten Angaben entsprechende Copolymerisate, in denen

a) 5 bis 30 Gew.-Teile, insbesondere 8 bis 25 Gew.-Teile Maleinsäureanhydrid,

b) 5 bis 85 Gew.-Teile, insbesondere 25 bis 73 Gew.-Teile an Monomeren der Formeln

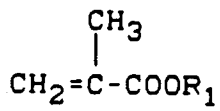 und/oder 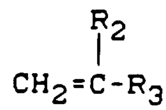

und

10 bis 65 Gew.-Teile, insbesondere 19 bis 50 Gew.-Teile an Monomeren der Formel

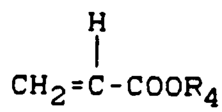

in copolymerisierter Form vorliegen.

Besonders bevorzugt werden als Komponente A') solche der gemachten Definition entsprechende Copolymerisate eingesetzt, in denen pro 100 Gew.-Teile Maleinsäureanhydrid 40 bis 140 Gew.-Teile an anderen Monomeren, ausgewählt aus der Gruppe bestehend aus Styrol, Vinyltoluol, α-Methylstyrol, α-Ethylstyrol, kernsubstituierten, gegebenenfalls Isomerengemische darstellenden Diethylstyrolen, Isopropylstyrolen, Butylstyrolen und Methoxystyrolen, Ethylvinylether, n-Propylvinylether, Isopropylvinylether, n-Butylvinylether, Isobutylvinylether, Vinylacetat, Vinylpropionat, Vinylbutyrat und beliebigen Gemischen dieser Monomeren, in copolymerisierter Form gegebenenfalls neben anderen Comonomeren vorliegen.

Die Herstellung der Copolymerisate A') kann durch Copolymerisation der beispielhaft genannten Monomeren nach üblichen radikalischen Polymerisationsverfahren erfolgen, wie beispielsweise Masse- oder Lösungspolymerisation.

Dabei werden die Monomeren bei Temperaturen von 60 bis 200° C, vorzugsweise 80 bis 160° C in Gegenwart von Radikalbildnern und gegebenenfalls Molekulargewichtsreglern copolymerisiert.

Die Copolymerisation wird vorzugsweise in inerten Lösungsmitteln bei Feststoffgehalten von 30 bis 95 Gew.-% durchgeführt. Geeignete Lösungsmittel sind beispielsweise Aromaten wie Benzol, Toluol, Xylol, Ester wie Ethylacetat, Butylacetat, Methylglykolacetat, Ethylglykolacetat, Methoxypropylacetat, Ether wie Tetrahydrofuran, Dioxan, Diethylenglykoldimethylether, Ketone wie Aceton, Methylethylketon, Methylisobutylketon.

Die Copolymerisation kann kontinuierlich oder diskontinuierlich erfolgen. Üblicherweise wird in einem Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation bei einem Überdruck von 0 bis 20 bar. Die Initiatoren werden in Mengen von 0,05 bis 15 Gew.-%, bezogen auf die Gesamtmenge der Monomeren, eingesetzt.

Geeignete Initiatoren sind übliche Radikalstarter wie z.B. aliphatische Azoverbindungen wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, z.B. Acetyl-, Propionyl- oder Butyrylperoxid, mit Brom-, Nitro-, Methyl- oder Methoxygruppen substituierte Benzoylperoxide, Laurylperoxide; symmetrische Peroxidicarbonate, z.B. Diethyl-, Diisopropyl-, Dicyclohexyl- sowie Dibenzoylperoxidicarbonat; tert.-Butylperoctoat, tert.-Butylperbenzoat oder tert.-Butylphenylperacetat sowie Peroxycarbonate wie z.B. tert.-Butyl-N-(phenylperoxy)-carbonat

oder tert.-Butyl-N-(2-, 3- oder 4-chlorphenylperoxy)-carbonat; Hydroperoxide wie beispielsweise tert.-Butylhydroperoxid, Cumolhydroperoxid; Dialkylperoxide wie Di-cumylperoxid; tert.-Butyl-cumylperoxid oder Di-tert.-butylperoxid.

Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisationsreaktion anfallenden Lösungen der Copolymerisate A′) können dann ohne weitere Aufarbeitung der Modifizierungsreaktion zugeführt werden. Selbstverständlich ist es jedoch auch möglich, die Copolymerisate destillativ von gegebenenfalls noch vorliegenden Restmengen an nicht umgesetzten Monomeren und Lösungsmittel zu befreien und die als Destillationsrückstand vorliegenden Copolymerisate A′) zu modifizieren.

Zur Herstellung der modifizierten Copolymerisate A) werden die Carbonsäureanhydridgruppen enthaltenden Copolymerisate A′) so mit hydroxy- oder aminofunktionellen (Meth)Acrylsäureestern umgesetzt, daß ein Teil der cyclischen Anhydridgruppen durch Additionsreaktion der genannten funktionellen (Meth)-Acrylsäureestern unter Ausbildung einer Halbester- oder Halbamidstruktur geöffnet wird. Es liegen danach modifizierte Copolymerisate A) vor, welche sowohl ungesättigte (Meth)Acrylatgruppen als auch intramolekulare Carbonsäureanhydridgruppen in chemisch gebundener Form aufweisen

Die Ringöffnungsreaktion der cyclischen Carbonsäureanhydridgruppen der beschriebenen Copolymerisate A′) durch aminofunktionelle (Meth)Acrylsäureester wie z.B. N-tert.-Butylaminoethylmethacrylat erfolgt schon bei niedrigen Temperaturen wie z.B. Raumtemperatur. Es ist jedoch vorteilhaft, die Reaktion durch Erwärmen auf bis zu 120 °C zu beschleunigen. Um unerwünschte Polymerisationsnebenreaktionen zu unterdrücken ist es zweckmäßig Polymerisationsinhibitoren wie z.B. Hydrochinon oder Hydrochinonmonomethylether mitzuverwenden.

Die entsprechende Ringöffnungsreaktion durch hydroxylfunktionelle (Meth)Acrylsäureester wie z.B. Hydroxyethyl(meth)acrylat erfordert Temperaturen von 70 bis 150 ° C, vorzugsweise 80 bis 130 ° C. Auch bei dieser Reaktion ist es zweckmäßig, Polymerisationsinhibitoren der oben beispielhaft genannten Art einzusetzen.

Für die Durchführung der Ringöffnungsreaktion der cyclischen Carbonsäureanhydridgruppen können z.B. alle (Meth)Acrylsäureester des Molekulargewichtsbereichs 116 bis 1500 oder deren Gemische zur Anwendung kommen, die eine freie Hydroxy- oder eine primäre oder sekundäre Aminogruppe aufweisen. Dabei können diese Produkte auch mehrere (Meth)Acrylatgruppen enthalten. Es können z.B. eingesetzt werden: Hydroxyethylacrylat, Hydroxyethylmethacrylat, 2-Hydroxypropylacrylat, 2-Hydroxypropylmethacrylat, 2-Hydroxybutylacrylat, Glycerindiacrylat, Glycerindimethacrylat, Trimethylolpropandiacrylat, Trimethylolpropandimethacrylat, Pentaerythrittriacrylat, Pentaerythrittrimethacrylat, Mono(meth)acrylate von mehrfach ethoxylierten oder propoxyliertem Ethylen- bzw. Propylenglykol, Dimethacrylate von mehrfach ethoxyliertem oder propoxyliertem Trimethylolpropan, Tri(meth)acrylate von mehrfach ethoxyliertem oder propoxyliertem Pentaerythrit, N-tert.-Butylaminoethylmethacrylat.

Zur Beschleunigung der Ringöffnungsreaktion können zusätzlich als Katalysatoren wirkende tertiäre Amine wie z.B. Triethylamin oder Tributylamin zugegeben werden.

Bei der Durchführung der zweiten Stufe des erfindungsgemäßen Verfahrens, d.h. bei der Modifizierung der Copolymerisate A′) kommen die beispielhaft genannten hydroxyl- oder aminofunktionellen (Meth)-Acrylsäureester im allgemeinen in solchen Mengen zum Einsatz, daß auf jede Carbonsäureanhydridgruppe der Copolymerisate A′) 0,01 bis 0,99 Hydroxylgruppen und/oder Aminogruppen der ungesättigten Modifizierungskomponente entfallen.

Wie bereits oben ausgeführt, kann die Modifizierungsreaktion sowohl in Abwesenheit von organischen Lösungsmitteln der beispielhaft genannten Art oder auch in Gegenwart der bei der Herstellung der Copolymerisate A′) verwendeten Lösungsmittel erfolgen.

In den erfindungsgemäßen Bindemitteln liegen neben den modifizierten Copolymerisaten A) als Härter B) organische Polyamine mit blockierten Aminogruppen vor. Unter "blockierten Aminogruppen" sind dabei solche Gruppen zu verstehen, die mit Wasser unter Freisetzung von primären und/oder sekundären Aminogruppen reagieren. Besonders bevorzugte blockierte Polyamine B) sind Aldimin-, Ketimin-, Oxazolan-, Hexahydropyrimidin- und/oder Tetrahydroimidazolgruppen aufweisende Verbindungen, die gleichzeitig auch mehrere dieser Gruppierungen enthalten können.

Die blockierten Polyamine B) weisen ein als Gewichtsmittel bestimmtes Molekulargewicht von 86 bis 10 000, bevorzugt von 250 bis 4000, auf und enthalten im statistischen Mittel 1 bis 50, bevorzugt 2 bis 10, und insbesondere 2 bis 4, Struktureinheiten der allgemeinen Formel

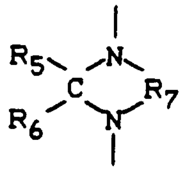 , 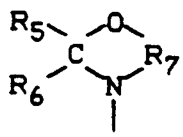 und/oder 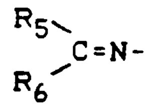

(IV) (V) (VI)

wobei

$R_5$ und $R_6$ für gleiche oder verschiedene Reste stehen und Wasserstoff, aliphatische Kohlenwasserstoffreste mit 1 bis 18 Kohlenstoffatomen, cycloaliphatische Kohlenwasserstoffreste mit 5 bis 10 Kohlenstoffatomen, araliphatische Kohlenwasserstoffreste mit 7 bis 18 Kohlenstoffatomen oder Phenylreste bedeuten, wobei die beiden Reste $R_5$ und $R_6$ zusammen mit dem benachbarten Kohlenstoffatom auch einen 5- oder 6-gliedrigen cycloaliphatischen Ring bilden können, und wobei vorzugsweise höchstens einer der Reste für Wasserstoff steht, und

$R_7$ für einen zweiwertigen aliphatischen Kohlenwasserstoffrest mit 2 bis 6 Kohlenstoffatomen steht, mit der Maßgabe, daß zwischen den beiden Stickstoffatomen 2 oder 3 Kohlenstoffe angeordnet sind.

Die genannten Molekulargewichte können nach der Methode der Gelpermeationschromatographie (Molekulargewichte von oberhalb 1000) bzw. aus der Stöchiometrie der zur Herstellung der Verbindungen eingesetzten Ausgangsmaterialien (Molekulargewichte bis 1000) ermittelt werden.

Bevorzugt eingesetzte Komponenten B) sind z.B. solche, die Hexahydropyrimidin- bzw. Tetrahydroimidazolstrukturen der allgemeinen Formel (IV) enthalten, für welche $R_5$ und $R_6$ für gleiche oder verschiedene aliphatische Kohlenwasserstoffreste mit 2 bis 10 Kohlenstoffatomen stehen, wobei einer der Reste auch für Wasserstoff stehen kann und $R_7$ für einen gegebenenfalls alkylsubstituierten Ethylen- oder Trimethylenrest steht.

Die Herstellung von blockierten Polyaminen der genannten Art gelingen in an sich bekannter Weise durch Umsetzung von entsprechenden Aldehyden bzw. Ketonen mit den entsprechenden Polyaminen.

Zur Herstellung der Hexahydropyrimidin- bzw. Tetrahydroimidazolgruppen aufweisenden Verbindungen B) geeignete Aldehyde bzw. Ketone sind beispielsweise solche der allgemeinen Formel

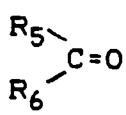 ,

die vorzugsweise ein Molekulargewicht von 72 bis 200 (Ketone) bzw. von 58 bis 250 (Aldehyde) aufweisen.

Beispiele hierfür sind Aceton, Methylethylketon, Methylpropylketon, Methylisopropylketon, Methyl-n-butylketon, Methylisobutylketon, Methyl-n-amylketon, Methylisoamylketon, Methylheptylketon, Diethylketon, Ethylbutylketon, Ethylamylketon, Diisopropylketon, Diisobutylketon, Cyclohexanon, Isophoron, Methyl-tert.-butylketon, 5-Methyl-3-heptanon, 4-Heptylketon, 1-Phenyl-2-propanon, Acetophenon, Methylnonylketon, 3,3,5-Trimethylcyclohexanon, Formaldehyd, Acetaldehyd, Propionaldehyd, Butyraldehyd, Isobutyraldehyd, Trimethylacetaldehyd, 2,2-Dimethylpropanal, 2-Ethylhexanal, 3-Cyclohexen-1-carboxaldehyd, Hexanal, Heptanal, Octanal, Valeraldehyd, Benzaldehyd, Tetrahydrobenzaldeyd, Hexahydrobenzaldehyd, Acrolein, Crotonaldehyd, Propargylaldehyd, p-Toluylaldehyd, 2-Methylpentanal, 3-Methylpentanal, Phenylethanal, 4-Methylpentanal.

Zur Herstellung der Hexahydropyrimidin- bzw. Tetrahydroimidazolgruppen aufweisenden Verbindungen bevorzugte Aldehyde und Ketone sind Butyraldehyd, Isobutyraldehyd, Trimethylacetaldehyd, 2,2-Dimethylpropanal, 2-Ethylhexanal, Hexanal, 3-Cyclohexan-1-carboxaldehyd, Heptanal, Octanal, Hexahydrobenzaldehyd, 2-Methylpentanal, Cyclohexanon, Cyclopentanon, Methylisopropylketon, Aceton, 3,3,5-Trimethylcyclohexanon und Methylcyclohexanon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei den zur Herstellung der Hexahydropyrimidin- bzw. Tetrahydroimidazolgruppen aufweisenden Verbindungen zum Einsatz gelangenden Polyaminen handelt es sich insbesondere um organische Verbindungen, die mindestens zwei primäre und/oder sekundäre Aminogruppen aufweisen.

Geeignete Polyamine sind beispielsweise solche der allgemeinen Formel

$R_8$-NH-$R_7$-NH-$R_9$ ,

in welcher

$R_7$ die obengenannte Bedeutung hat und

$R_8$ und $R_9$ für gleiche oder verschiedene Reste stehen und Wasserstoff, aliphatische Kohlenwasserstoffreste mit 1 bis 10, bevorzugt 1 bis 4 Kohlenstoffatomen, cycloaliphatische Kohlenwasserstoffreste mit 5 bis 10, vorzugsweise 6 Kohlenwasserstoffatomen oder aromatische Kohlenwasserstoffreste mit 7 bis 15, vorzugsweise 7 Kohlenwasserstoffatomen, stehen, wobei die genannten Kohlenwasserstoffreste, insbesondere die genannten aliphatischen Kohlenwasserstoffreste, gegebenenfalls Heteroatome wie Sauerstoff, Stickstoff oder Schwefel in Form von Ether-, Ester-, Amid-, Urethan-, Oxiran-, Keton-, Lactam-, Harnstoff-, Thioether-, Thioester-oder Lactongruppen aufweisen können, oder wobei die Reste auch reaktionsfähige Hydroxyl-oder Aminogruppen aufweisen können.

Besonders bevorzugte Polyamine sind solche, bei denen $R_8$ und $R_9$ für gleiche oder verschiedene Reste stehen und Wasserstoff und/oder $C_1$-$C_6$-Alkylreste wie Methyl-, Ethyl-, n-Propyl-, iso-Propyl-, n-Butyl-, iso-Butyl-, tert.-Butyl-, n-Pentyl- oder n-Hexylreste bedeuten, oder wobei zumindest einer der Reste $R_8$ bzw. $R_9$ für einen Rest steht, wie er durch Anlagerung eines Aminwasserstoffatoms an eine olefinisch ungesättigte Verbindung erhalten wird. Zur Herstellung derartiger, modifizierter Polyamine geeignete, olefinisch ungesättigte Verbindungen sind beispielsweise Derivate der (Meth)Acrylsäure wie Ester, Amide, Nitrile oder z.B. Vinylaromaten wie Styrol, -Methylstyrol, Vinyltoluol oder z.B. Vinylester wie Vinylacetat, Vinylpropionat, Vinylbutyrat oder z.B. Vinylether wie Ethylvinylether, Polyvinylether, Butylvinylether oder Mono- und Diester der Fumarsäure, Maleinsäure oder Tetrahydrophthalsäure.

$R_8$ und/oder $R_9$ können auch für einen Aminoalkyl- oder Hydroxyalkylrest mit beispielsweise 2 bis 4 Kohlenstoffatomen stehen.

Ganz besonders bevorzugte Polyamine sind Ethylendiamin, 1,2-Propylendiamin, 1,3-Propylendiamin, 1,2- und 1,3-Butylendiamin, Diethylentriamin sowie Derivate dieser Polyamine.

Als Komponente B) geeignete, Oxazolangruppen der allgemeinen Formel (V) aufweisende Verbindungen sind vorzugsweise solche, für welche $R_5$ und $R_6$ für gleiche oder verschiedene Reste stehen und Wasserstoff oder aliphatische Kohlenwasserstoffreste mit 1 bis 18 und insbesondere 1 bis 8 Kohlenstoffatomen stehen, oder wobei die Reste $R_5$ und $R_6$ zusammen mit dem Kohlenstoffatom des heterocyclischen Rings einen cycloaliphatischen Ring mit insgesamt 4 bis 9 Kohlenstoffatomen, insbesondere einen Cyclohexanring bilden, mit der Maßgabe, daß höchstens einer der Reste $R_5$ oder $R_6$ für Wasserstoff steht, und wobei $R_7$ für einen Alkylenrest mit 2 bis 4, vorzugsweise 2 bis 3 Kohlenstoffatomen steht, mit der Maßgabe, daß zwischen dem Sauerstoff- und dem Stickstoffatom mindestens 2 Kohlenstoffatome angeordnet sind.

Die Herstellung der oxazolanhaltigen Komponente B) gelingt in an sich bekannter Weise durch Umsetzung von ensprechenden Aldehyden bzw. Ketonen der Formel

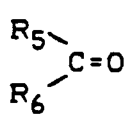

mit geeigneten Hydroxyaminen der nachstehend näher genannten Art.

Als Aldehyde bzw. Ketone kommen grundsätzlich solche der oben bereits beispielhaft genannten Art in Betracht. Bevorzugte Aldehyde bzw. Ketone sind hier Butyraldehyd, Isobutyraldehyd, Trimethylacetaldehyd, 2,2-Dimethylpropanal, 2-Ethylhexanal, 3-Cyclohexen-1-carboxaldehyd, Hexahydrobenzaldehyd, Cyclopentanon, Cyclohexanon, Methylcyclopentanon, Methylcyclohexanon, 3,3,5-Trimethylcyclohexanon, Cyclobutanon, Methylcyclobutanon, Aceton, Methylethylketon und Methylisobutylketon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei Hydroxyaminen handelt es sich insbesondere um organische Verbindungen, die mindestens eine aliphatische Aminogruppe und mindestens eine aliphatisch gebundene Hydroxylgruppe aufweisen. Die Hydroxyamine weisen im allgemeinen ein zwischen 61 und 500, vorzugsweise zwischen 61 und 300 liegendes Molekulargewicht auf.

Geeignete Hydroxyamine können z.B. sein: Bis-(2-hydroxyethyl)-amin, Bis-(2-hydroxypropyl)-amin, Bis-(2-hydroxybutyl)-amin, Bis(3-hydroxypropyl)-amin, Bis-(3-hydroxyhexyl)-amin, N-(2-hydroxypropyl)-N-(2-hydroxyethyl)-amin, 2-(Methylamino)-ethanol, 2-(Ethylamino)-ethanol, 2-(Propylamino)-ethanol, 2-(Butylamino)-ethanol, 2-Amino-2-methyl-1-propanol, 2-Amino-2-ethyl-1-propanol, 2-Amino-2-propyl-1-propanol, 2-Amino-2-methyl-1,3-propandiol, 2-Amino-3-methyl-3-hydroxybutan, Propanolamin, Ethanolamin.

Ganz besonders bevorzugt sind: Bis-(2-hydroxyethyl)-amin, Bis-(2-hydroxypropyl)-amin, Bis-(2-hydroxybutyl)-amin, Bis-(3-hydroxyhexyl)-amin, 2-(Methylamino)-ethanol, 2-(Ethylamino)-ethanol, 2-Amino-2-methyl-1-propanol, 2-Amino-2-ethyl-1-propanol, Propanolamin und Ethanolamin.

Zu den bevorzugten Aldimin- bzw. Ketimingruppen aufweisenden Verbindungen gehören solche, die Struktureinheiten der allgemeinen Formel (VI)

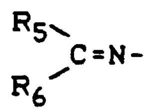

enthalten, wobei

$R_5$ und $R_6$ für gleiche oder verschiedene Reste stehen und Wasserstoff oder aliphatische Kohlenwasserstoffreste mit 1 bis 8 Kohlenstoffatomen darstellen, die auch zusammen mit dem Kohlenstoffatom zu einen cycloaliphatischen Ring, insbesondere einem Cyclohexanring verknüpft sein können.

Zur Herstellung dieser Verbindungen sind im Prinzip die bereits oben beispielhaft genannten Aldehyde bzw. Ketone geeignet. Bevorzugte Aldehyde bzw. Ketone sind hier Butyraldehyd, Isobutyraldehyd, Trimetylacetaldehyd, 2,2-Dimethylpropanal, 2-Ethylhexanal, 3-Cyclohexen-1-carboxaldehyd, Hexahydrobenzaldehyd und insbesondere solche Ketone, die einen Siedepunkt von unter 170 °C aufweisen und bei Raumtemperatur eine gute Flüchtigkeit zeigen, wie z.B. Methylisobutylketon, Methylisopropylketon, Diethylketon, Diisobutylketon, Methyl-tert.-butylketon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei den zur Herstellung von Ketimin- bzw. Aldimingruppen enthaltenden Komponente B) zum Einsatz gelangenden Polyaminen handelt es sich insbesondere um organische Verbindungen, die mindestens zwei aliphatisch und/oder cycloaliphatisch gebundene primäre Aminogruppen aufweisen. Die Verwendung von solchen Polyaminen, die aromatische Aminogruppen aufweisen, ist zwar ebenfalls möglich, jedoch weniger bevorzugt. Die Polyamine weisen im allgemeinen ein von 60 bis 500, vorzugsweise von 88 bis 400 liegendes Molekulargewicht auf, jedoch können auch höhermolekulare, endständige Aminogruppen aufweisende Prepolymere als Polyaminkomponente bei der Herstellung der Komponente B) eingesetzt werden.

Besonders bevorzugte Polyamine sind diprimäre aliphatische bzw. cycloaliphatische Diamine wie beispielsweise Tetramethylendiamin, Hexamethylendiamin, Isophorondiamin, Bis-(4-aminocyclohexyl)-methan, Bis-aminomethylhexahydro-4,7-methanoindan, 1,4-Cyclohexandiamin, 1,3-Cyclohexandiamin, 2-Methylcyclohexandiamin, 4-Methylcyclohexandiamin, 2,2,5-Trimethylhexandiamin, 2,2,4-Trimethylhexandiamin, 1,4-Butandiol-bis-(3-aminopropyl)-ether, 2,5-Diamino-2,5-dimethylhexan, Bis-amino-methylcyclohexan, Bis-(4-amino-3,5-dimethylcyclohexyl)-methan oder deren Gemische.

Ganz besonders bevorzugt sind Tetramethylendiamin, Hexamethylendiamin, Isophorondiamin, Bis-aminomethylcyclohexan, 1,4-Cyclohexandiamin, Bis-aminomethylhexahydro-4,7-methanoindan und Bis-(4-aminocyclohexyl)-methan.

Neben diesen bevorzugten Diaminen können zur Herstellung der Aldimine bzw. Ketimine auch endständige primäre Aminogruppen aufweisende Prepolymere eingesetzt werden, d.h. Verbindungen, die mindestens zwei endständige Aminogruppen und ein Molekulargewicht von 500 bis 5000, vorzugsweise 500 bis 2000, aufweisen. Zu diesen Verbindungen gehören beispielsweise die aus der Polyurethanchemie an sich bekannten Aminopolyether, wie sie beispielsweise in der EP-A 0 081 701 beschrieben werden, oder z.B. Amid-, Harnstoff-, Urethan- oder sekundäre Aminogruppen aufweisende Umsetzungsprodukte von mindestens difunktionellen Carbonsäuren, Isocyanaten oder Epoxiden mit Diaminen der oben beispielhaft genannten Art, wobei diese Umsetzungsprodukte noch mindestens zwei primäre Aminogruppen aufweisen. Auch

Gemische von derartigen höhermolekularen Polyaminen mit den beispielhaft genannten niedermolekularen Polyaminen können zum Einsatz gelangen.

Zu den aromatischen Polyaminen, die im Prinzip auch zur Herstellung der Aldimine bzw. Ketimine geeignet, jedoch weniger bevorzugt sind, gehören beispielsweise 2,4- und 2,6-Diaminotoluol, 1,4-Diaminobenzol oder 4,4′-Diaminodiphenylmethan.

Die Herstellung der Komponente B), welche Aldimin, Ketimin-, Oxazolan-, Hexahydropyrimidin- oder Tetrahydroimidazolgruppen enthalten kann, erfolgt durch Umsetzung der Ausgangskomponenten, wobei im allgemeinen die Mengenverhältnisse der Reaktionspartner so gewählt werden, daß die Aminoverbindungen, bezogen auf die jeweilig angestrebte Reaktion, in 1- bis 1,5-fachem molarem Überschuß, bezogen auf die Carbonylgruppen, vorliegen. Gegebenenfalls können zur Reaktionsbeschleunigung katalytische Mengen von sauren Substanzen wie z.B. p-Toluolsulfonsäure, Salzsäure, Schwefelsäure, Aluminium-III-chlorid, Zinnverbindungen eingesetzt werden.

Die Umsetzung erfolgt im allgemeinen innerhalb des Temperaturbereichs von 60 bis 180 °C, wobei die Reaktion in Gegenwart eines Schleppmittels zur Entfernung des Reaktionswassers so lange durchgeführt wird, bis die berechnete Menge an Wasser abgespalten ist bzw. bis kein Wasser mehr abgespalten wird.

Anschließend werden Schleppmittel und gegebenenfalls vorliegende, nicht umgesetzte Ausgangsmaterialien destillativ abgetrennt. Geeignete Schleppmittel sind z.B. Toluol, Xylol, Cyclohexan, Octan. Die so erhaltenen Rohprodukte können ohne weitere Reinigungsschritte als Komponente B) zur Herstellung der Bindemittelkombinationen verwendet werden. Werden besonders hohe Anforderungen an die Reinheit der Komponente B) gestellt, so ist es auch möglich, z.B. durch eine Destillation, die Komponenten B) in reiner Form zu erhalten.

Zu den bevorzugten, blockierten Polyaminen der Komponente B) gehören auch solche, in denen 2 bis 10 Struktureinheiten der allgemeinen Formel (IV), (V), (VI) enthalten sind, und die durch Verknüpfung von unterschiedlichen, derartige Struktureinheiten aufweisenden Verbindungen unter Ausbildung von z.B. Ester-, Ether-, Amid-, Harnstoff- und/oder Urethanbindungen erhalten werden.

Die auf diese Weise miteinander zu verknüpfenden, Struktureinheiten der genannten Formeln enthaltenden Verbindungen müssen mindestens eine primäre bzw. sekundäre Aminogruppe oder mindestens eine Hydroxylgruppe in nicht blockierter Form enthalten. Geeignete Modifizierungsmittel, die zur Verknüpfung der genannten Verbindungen geeignet sind, sind z.B. Polyisocyanate, Polyepoxide, Polycarbonsäuren und Polyacryloylverbindungen.

Für diese Modifizierungsreaktion geeignete Polyisocyanate sind beispielseise aliphatische, cycloaliphatische, araliphatische, aromatische und heterocyclische Polyisocyanate, wi sie z.B. von W.Siefken in Justus Liebigs Annalen der Chemie, 562, Seite 75 bis 1346, beschrieben werden, beispielsweise, 1,4-Tetramethylendiisocyanat, 1,6-Hexamethylendiisocyanat, 1,12-Dodecandiisocyanat, Cyclobutan-1,3-diisocyanat, Cyclohexan-1,3-diisocyanat, Cyclohexan-1,4-diisocyanat, 1-Isocyanato-3,3,5-trimethyl-5-isocyanatomethyl-cyclohexan, 2,4- und 2,6-Hexahydrotoluylendiisocyanat, Hexahydro-1,3- und -1,4-phenylendiisocyanat, Perhydro-2,4′-und/oder -4,4′-diphenylmethandiisocyanat, 1,3-Phenylendiisocyanat, 1,4-Phenylendiisocyanat, 2,4-Toluylendiisocyanat, 2,6-Toluylendiisocyanat, Diphenylmethan-2,4′-und/oder -4,4′-diisocyanat, Naphthylen-1,5-diisocyanat, Gemische dieser und anderer Polyisocyanate, Polyisocyanate mit Carbodiimidgruppen (z.B. DE-OS 10 92 007), Polyisocyanate mit Allophanatgruppen (z.B. GB-PS 944 890), Isocyanuratgruppen aufweisende Polyisocyanate (z.B. DE-PS 10 22 789, DE-PS 12 22 067), Urethangruppen aufweisende Polyisocyanate (z.B. US-PS 33 94 164) oder durch Umsetzung von mindestens difunktionellen Hydroxyverbindungen mit überschüssigen, mindestens difunktionellen Isocyanaten hergestellte Polyisocyanate, Biuretgruppen aufweisende Polyisocyanate (z.B. DE-PS 11 01 394) und präpolymere bzw. polymere Substanzen mit mindestens zwei Isocyanatgruppen.

Vertreter dieser erfindungsgemäß zu verwendenden Verbindungen sind z.B. in High Polymers, Vol. XVI, "Polyurethans, Chemistry and Technology" Interscience Publishers, New York, London, Band I, 1962, S. 32 bis 42 bzw. 45 bis 54 und Band II, 1964, S. 5 bis 6 und 198 bis 199, sowie im Kunststoffhandbuch, Band VII, Vieweg-Höchtlen, Carl-Hanser-Verlag, München, 1966, S. 45 bis 72, beschrieben.

Für die genannte Modifizierungsreaktion genannte Polyepoxide sind beispielsweise aliphatische, cycloaliphatische, araliphatische, aromatische und heterocyclische, mindestens zwei Epoxidgruppen enthaltende Substanzen, wie z.B. epoxidierte Ester aliphatischer polybasischer Säuren mit ungesättigten einwertigen Alkoholen, Glycidylether von Polyhydroxyverbindungen, Glycidylester von Polycarbonsäuren, epoxidgruppenhaltige Copolymerisate.

Für die Modifizierungseaktion geeignete Polycarbonsäuren sind beispielsweise aliphatische, cycloaliphatische, araliphatische, aromatische und heterocyclische, mindestens zwei Carboxylgruppen enthaltende Substanzen, wie z.B. Adipinsäure, Dimerfettsäure, Phthalsäure, Terephthalsäure, Isophthalsäure, Fumarsäure, Maleinsäure, Bernsteinsäure, Trimellithsäure, Pyromellithsäure, (Meth)acrylsäure-haltige Copolymerisate,

saure Polyester oder saure Polyamide.

Anstelle der beispielhaft genannten Säuren können auch die entsprechenden Säureanhydride (sofern es sich um intramolekulare Säureanhydride bildende Säuren handelt) oder die entsprechenden einfachen Alkylester, insbesondere Methylester für Modifizierungsreaktion eingesetzt werden.

Für die Modifizierungsreaktion geeignete Verbindungen mit mindestens zwei olefinischen Doppelbindungen der genannten Art sind insbesondere Derivate der Acrylsäure bzw. Methacrylsäure wie beispielsweise Hexandiol-bis-(meth)acrylsäureester, Trimethylolpropan-tris-(meth)-acrylsäureester, Pentaerythrittetra-(meth)acrylsäureester, OH-funktionelle Polyester bzw. Polyacrylate, die mit Acrylsäure verestert sind, Diethylenglykoldimethacrylsäureester, Umsetzungsprodukte von Polyisocyanaten mit Hydroxyalkyl(meth)-acrylat.

Bei der Modifizierungsreaktion zur Herstellung von höherfunktionellen Komponenten B) ist es auch möglich, Gemische verschiedener blockierter Amine einzusetzen, die jeweils mindestens eine freie, mit dem Modifizierungsmittel reaktionsfähige Hydroxyl- oder Aminogruppe aufweisen.

Ketimin- bzw. Aldimingruppen-haltige Polyamine, die noch mindestens eine freie primäre bzw. sekundäre Aminogruppe oder eine freie Hydroxylgruppe enthalten, erhält man z.B. durch Umsetzung von mindestens difuktionellen Aminen mit Ketonen und/oder Aldehyden in solchen Äquivalentverhältnissen, daß mindestens eine Aminogruppe frei bleibt.

Auch bei der Verwendung von beispielsweise solchen Polyaminen, die neben primären Aminogruppen mindestens eine sekundäre Aminogruppe aufweisen, entstehen bei der Umsetzung mit Aldehyden oder Ketonen Aldimine bzw. Ketimine, die mindestens eine freie sekundäre Aminogruppe aufweisen (falls unter Einhaltung eines Äquivalentverhältnisses von primären Aminogruppen zu Carbonylgruppen von 1:1 gearbeitet worden ist), bzw. die neben mindestens einer sekundären Aminogruppe noch freie primäre Aminogruppen enthalten (falls die Carbonylverbindungen, bezogen auf die primäre Aminogruppen, im Unterschuß verwendet worden sind). Derartige primär-sekundäre Polyamine sind beispielsweise Diethylentriamin, Triethylentetramin, Tetraethylenpentamin, Dipropylentriamin, Tripropylentetramin.

Oxazolangruppen enthaltende Verbindungen, die noch mindestens eine reaktive primäre bzw. sekundäre Aminogruppe oder eine Hydroxygruppe aufweisen, erhält man z.B. durch Umsetzung von Hydroxyaminen, die neben einer Hydroxygruppe und einer sekundären Aminogruppe noch mindestens eine weitere Hydroxygruppe und/oder primäre bzw. sekundäre Aminogruppen aufweisen, oder durch Umsetzung von geeigneten Hydroxyaminen mit einer Hydroxygruppe und einer primären Aminogruppe in geeigneten Äquivalentverhältnissen mit Ketonen und/oder Aldehyden, wie sie z.B. weiter oben beschrieben worden sind. Geeignete Hydroxyamine können z.B. sein: Bis-(2-hydroxyethyl)-amin, Bis-(2-hydroxypropyl)-amin,Bis-(2-hydroxybutyl)-amin, Bis-(3-hydroxypropyl)-amin, Bis-(3-hydroxyhexyl)-amin, N-(2-hydropropyl)-N-(6-hydroxyhexyl)-amin, 2-Amino-2-methyl-1-propanol, 2-Amino-2-methyl-1,3-propandiol, 2-Amino-3-methyl-3-hydroxybutan,Aminoethanol.

Die Herstellung der Oxazolangruppen enthaltenden Hydroxyamine, die noch mindestens eine freie primäre bzw. sekundäre Aminogruppe bzw. eine Hydroxygruppe aufweisen, erfolgt durch Umsetzung der genannten Ausgangskomponenten unter Einhaltung eines solchen Äquivalentverhältnisses von Amino- bzw. Hydroxygruppen zu Aldehyd- bzw. Ketongruppen, das mindestens eine primäre bzw. sekundäre Aminogruppe bzw. eine Hydroxygruppe nicht blockiert wird und für die anschließende Umsetzung mit dem als Modifizierungsmittel verwendeten Reaktionspartner zur Verfügung steht.

Hexahydropyrimidin- bzw. Tetrahydroimidazolgruppen enthaltende Verbindungen, die noch mindestens eine reaktive primäre bzw. sekundäre Aminogruppe oder eine Hydroxygruppe aufweisen, erhält man z.B. durch Umsetzung von Hydroxyaminen, die neben mindestens einer Hydroxygruppe noch zwei sekundäre Aminogruppen enthalten, wie z.B. N-Methyl-N′-4-hydroxytetramethylendiamin, oder durch Umsetzung von Polyaminen, die neben mindestens einer sekundären Aminogruppe mindestens eine primäre Aminogruppe oder mindestens zwei weitere sekundäre Aminogruppen enthalten, wie z.B. N-Methyl-1,3-diaminoethan, N-Methyl-1,3-diaminopropan, N-Methyl-1,3-diaminobutan, Diethylentriamin, N-Methyldiethylentriamin, N,N-Bis-(3-aminopropyl)-amin, N,N′-Dimethyl-diethylentriamin.

Die Herstellung der Hexahydropyrimidin- bzw. Tetrahydroimidazolgruppen enthaltenden Verbindungen, welche noch mindestens eine freie primäre bzw. sekundäre Aminogruppe bzw. eine Hydroxylgruppe aufweisen, erfolgt durch Umsetzung der genannten Ausgangsverbindungen unter Einhaltung eines solchen Äquivalentverhältnisses von Amino-bzw. Hydroxygruppen zu Aldehyd- bzw. Ketogruppen, daß mindestens eine primäre bzw. sekundäre Aminogruppe bzw. eine Hydroxylgruppe nicht blockiert wird und für die anschließende Umsetzung mit dem als Modifizierungsmittel verwendeten Reaktionspartner zur Verfügung steht.

Zur näheren Erläuterung seien folgende Struktureinheiten, welche zum Aufbau solcher höhermolekularer, Ester-, Ether-, Amid-, Harnstoff-, Urethanbindungen enthaltender Komponenten B) geeignet sind,

beispielhaft genannt:

- Bisketimin aus Diethylentriamin und Aceton

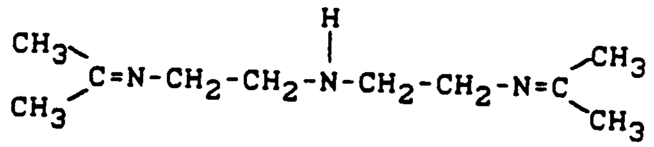

- Aldimin aus Isophorondiamin und Isobutyraldehyd

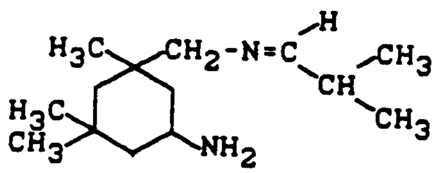

- Oxazolan aus Diethanolamin und Isobutyraldehyd

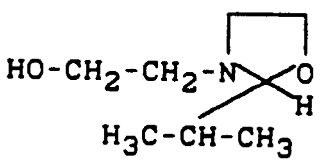

- Hexahydropyrimidin aus N-Methyl-1,3-diaminopropan und Cyclohexanon

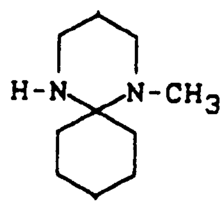

Falls die oben beispielhaft genannten Modifizierungsmittel mit freien primären bzw. sekundären Amino- bzw. Hydroxylgruppen aufweisenden Hexahydropyrimidinen bzw. Tetrahydroimidazolen umgesetzt werden, entstehen höherfunktionelle Hexahydropyrimidine bzw. Tetrahydroimidazole. Entsprechendes gilt für die Modifizierung von Aldiminen bzw. Ketiminen und für die Modifizierung von Oxazolanen.

Falls die Modifizierungsmittel jedoch mit Gemischen aus Hexahydropyrimidinen, Tetrahydroimidazolen, Aldiminen, Ketiminen und/oder Oxazolanen, welche freie primäre bzw. sekundäre Amino- bzw. Hydroxylgruppen aufweisen, umgesetzt werden, entstehen Vernetzungskomponenten B), in denen Hexahydropyrimidine, Tetrahydroimidazole, Ketimine, Aldimine und/oder Oxazolane chemisch miteinander verknüpft sind.

Durch diese Modifizierungs- bzw. Verknüpfungsreaktionen sind somit die unterschiedlichsten, als Komponente B) geeigneten Verbindungen zugänglich.

Die Modifizierungsreaktion wird üblicherweise in einem Lösungsmittel der oben beispielhaft genannten Art bei Reaktionstemperaturen von 30 bis 180 °C, gegebenenfalls am Wasserabscheider, durchgeführt.

Dabei wird in der Regel ein äquivalentes Verhältnis von reaktionsfähigen Gruppen der blockierten Polyamine zu den reaktionsfähigen Gruppen des "Modifizierungsmittels" gewählt. Es ist jedoch auch möglich, die "Modifizierungsmittel" im Unterschuß, etwa unter Verwendung von 0,75 bis 0,99-fach äquivalenten Mengen, einzusetzen.

Durch die genannten Modifizierungsreaktionen zugängliche, als Komponente B) geeignete Polyamine sind beispielsweise Verbindungen der Formeln:

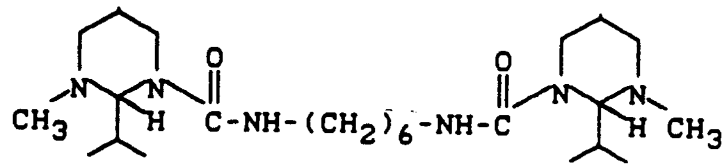

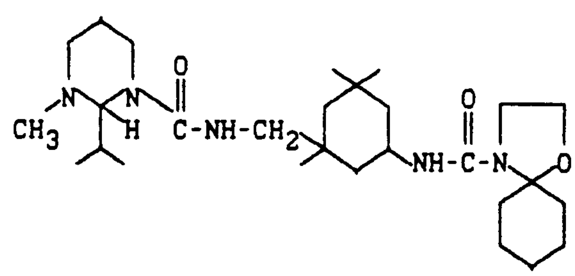

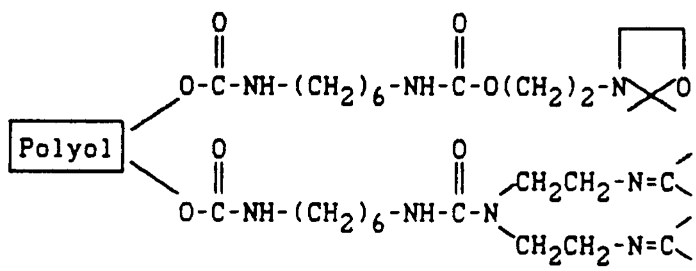

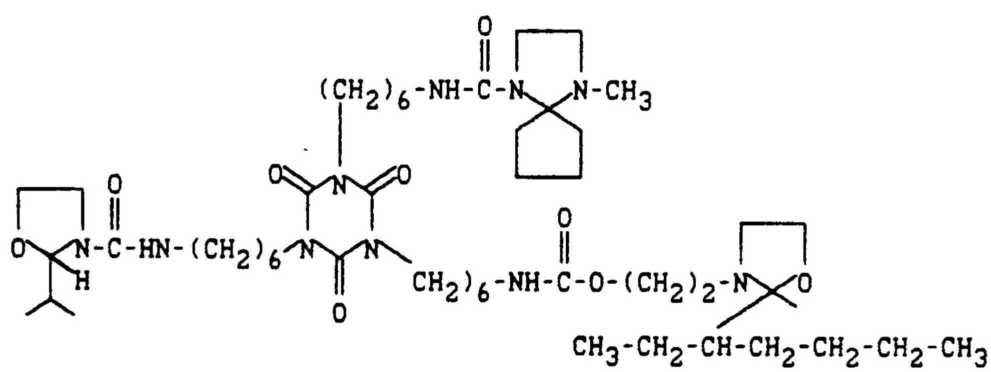

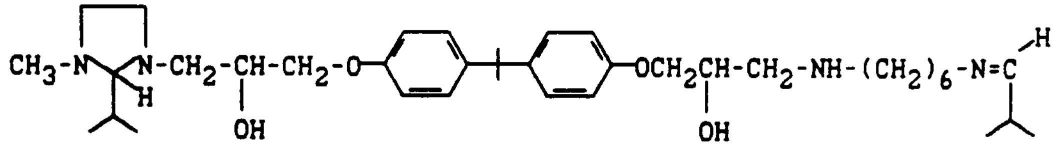

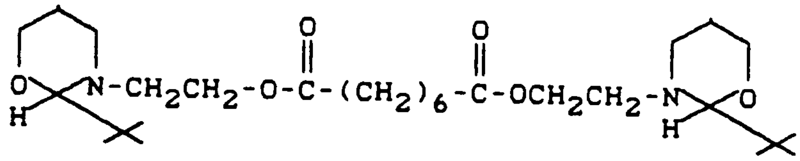

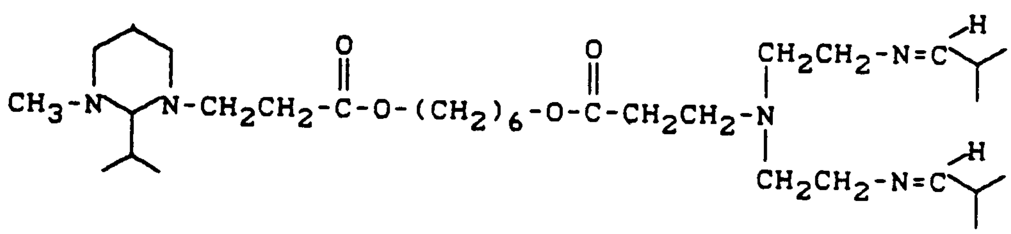

Die erfindungsgemäßen Bindemittel können neben den wesentlichen Komponenten A) und B) gegebenenfalls als weitere Komponenten C) Hilfs- und Zusatzmittel der unterschiedlichsten Art enthalten.

Zu diesen gehören beispielsweise C1) ein- und/oder mehrwertige Alkohole, die in Mengen von bis zu 20 Gew.-Teilen, bezogen auf 100 Gew.-Teile der Kombinationen aus A) und B), in den Bindemitteln vorliegen können.

Geeignete einwertige Alkohole sind beispielsweise Ethanol, n-Propanol, iso-Propanol, n-Butanol, sek.-Butanol, tert.-Butanol, n-Pentanol, iso-Pentanol, n-Hexanol, iso-Hexanol, Cyclopentanol, Cyclohexanol, Heptanol, Octanol, Methylglykol, Ethylglykol, Propylglykol, Isopropylglykol, Butylglykol, Methyldiglykol, Ethyldiglykol, Propyldiglykol, Butyldiglykol, Methyltriglykol, Hexylglykol, Propylenglykolmonomethylether, Tripropylenglykolmonomethylehter, Dipropylenglykolmonomethylether, Glykolsäurealkylester, Milchsäurealkylester, 2-Ethylbutanol, 2-Ethylhexanol, 3-Methoxybutanol, Diacetonalkohol, Furfurylalkohol, Tetrahydrofurfurylalkohol, Caprylalkohol, Caprinalalkohol, Laurinalkohol, Myristinalkohol, Palmitinalkohol, Stearinalkohol, Archinalkohol, Behenalkohol, Lignocerinalkohol, Lauroleinalkohol, Myristoleinalkohol, Palmitoleinalkohol, Ölalkohol, Gadoleinalkohol, Eruccaalkohol, Linolalkohol, Linolenalkohol, Licanalkohol, Arachidonalkohol, synthetische Fettalkohole und Gemische dieser und/oder andere Monoalkohole.

Geeignete mehrwertige Alkohole sind beispielsweise an sich bekannte Copolymerisate von Acrylsäurederivaten, Methacrylsäurederivaten, Vinylaromaten, Vinylether und Vinylester, welche hydroxylfunktionelle Monomere wie z.B. Hydroxyalkyl(meth)acrylate einpolymerisiert enthalten. Solche Copolymerisate werden z.B. beschrieben in EP-A-64 338, EP-A-134 691, EP-A-103 199, EP-A-48 128.

Weitere mehrwertige Alkohole sind an sich bekannte hydroxylfunktionelle Polyesterharze, wie sie z.B. in H. Wagner/H. F. Sarx, Lackkunstharze, Carl-Hanser-Verlag München 1971, S. 86 ff. beschrieben werden.

Weitere mehrwertige Alkohole sind beispielsweise hydroxylfunktionelle Polyetherverbindungen wie z.B. die Alkoxylierungsprodukte von niedermolekularen, mehrwertigen Alkoholen der nachstehend beispielhaft genannten Art.

Weitere geeignete mehrwertige Alkohole sind beispielsweise einfache, mehrwertige Alkohole wie Neopentylglykol, Hexandiol, Butandiol, 1,4-Cyclohexandiol, 1,4-Cyclohexandimethanol, Ethylenglykol, Glycerin, Trimethylolpropan, 1,2-Propandiol, 1,3-Propantriol, 1,5-Pentandiol, 1,12-Octadecandiol, 2-Buten-1,4-diol, 2-Butin-1,4-diol, Pentaerythrit, 4,4-(1-Methylethyliden)-biscychlohexanol, Bis-hydroxymethyl-hexahydro-4,7-methano-indan, 2,2-Bis-n-(2-hydroxyethoxy)-phenylpropan.

Weitere geeignete mehrwertige Alkohole sind beispielsweise Umsetzungsprodukte von Caprolacton mit den genannten Alkoholen.

Weitere geeignete mehrwertige Alkohole sind schließlich auch hydroxyfunktionelle Polyadditionsverbindungen, wie sie aus überschüssigen Mengen an Polyhydroxylverbindungen der beispielhaft genannten Art mit organischen Polyisocyanaten der oben beispielhaft genannten Art erhältlich sind.

Die erfindungsgemäßen Bindemittelkombinationen können als weitere Hilfsmittel auc C2) Katalysatoren enthalten. Geeignete Katalysatoren sind insbesondere tert.-Amine des Molekulargewichtsbereichs 89 bis 1000 wie z.B. 1,4-Diazabicyclo-(2,2,2)-octan, Triethylamin, Triethanolamin, Dimethylethanolamin, Methyldiethanolamin, Diethylhexanolamin, N,N,N',N'-Tetramethylethylendiamin, N,N-Dimethyl-1,3-propandiamin, 1,8-Diazabicyclo-(5,4,0)-undec-7-en.

Schließend können die erfindungsgemäßen Bindemittelkombinationen als weitere Hilfs- und Zusatzmittel C) beispielsweise Lösungs- bzw. Verdünnungsmittel, Verlaufshilfsmittel, Antioxidantien oder UV-Absorber

enthalten.

Die Herstellung der erfindungsgemäßen Bindemittel bzw. Bindemittelkombinationen erfolgt dergestalt, daß man die Ausgangskomponenten A) und B), sowie gegebenenfalls die Hilfs- und Zusatzmittel C) miteinander vermischt. Im Falle der Mitverwendung von Lösungs- bzw. Verdünnungsmitteln als Komponente C) können diese bereits einer oder mehreren der Einzelkomponenten oder aber erst dem Gemisch aus den Komponenten A) und B) zugemischt werden. Insbesondere ist eine Ausführungsform denkbar, derzufolge die Lösungs- bzw. Verdünnungsmittel auch schon während der Herstellung einer oder mehrerer Ausgangskomponenten zugegen sind, wie dies z.B. vorstehend bei der Herstellung der Copolymerisate beschrieben worden ist. Die Lösungs- bzw. Verdünnungsmittel sollten weitgehend wasserfrei sein, um eine ausreichende Verarbeitungszeit der Gemische sicherzustellen. Lösungs- bzw. Verdünnungsmittel werden im allgemeinen in solchen Mengen mitverwendet, die zur Einstellung von geeigneten Verarbeitungsviskositäten der erfindungsgemäßen Kombinationen erforderlich sind. Der Lösungsmittelgehalt der der erfindungsgemäßen Verwendung zuzuführenden erfindungsgemäßen Bindemittel liegt im allgemeinen bei 10 bis 80 Gew.-%. Durch Verwendung geeigneter, vergleichsweise niedermolekularer, modifizierter Copolymerisate A) ist es jedoch auch prinzipiell möglich, den Lösungs- bzw.

Verdünnungsmittelgehalt noch weiter zu reduzieren, bzw. auf die Mitverwendung dieser Hilfsmittel völlig zu verzichten.

Gemäß einer bevorzugten Ausführungsform des erfindungsgemäßen Verfahrens werden als alleinige blockierte Polyamine Verbindungen B) eingesetzt, die keine in Abwesenheit von Feuchtigkeit gegenüber Anhydrid- und ungesättigten (Meth)Acrylatgruppen reaktionsfähige Gruppen aufweisen, und deren blockierte Aminogruppen ausschließlich aus Hexahydropyrimidin-, Tetrahydroimidazol-, Aldimin-, Ketimin- und/oder Oxazolangruppen der genannten Art bestehen. Die bevorzugten, so hergestellten erfindungsgemäßen Kombinationen enthalten 40 bis 90 Gew.-Teile an Copolymerisaten A) und 10 bis 60 Gew.-Teile an Hexahydropyrimidin-, Tetrahydroimidazol-, Ketimin-, Aldimin- bzw. Oxazolangruppen aufweisende Verbindungen B).

Die Mengenverhältnisse der Einzelkomponenten A) und B) werden im allgemeinen so gewählt, daß auf jede blockierte Aminogruppe der Komponente B) insgesamt 0,2 bis 8, vorzugsweise 0,5 bis 4 ungesättigte (Meth)Acrylat- und Anhydridgruppen der Komponente A) entfallen. Im allgemeinen wird man einen höheren Überschuß an den letztgenannten Gruppen innerhalb der genannten Bereiche dann wählen, wenn die übrigen Komponenten reaktive Gruppen aufweisen, die in Abwesenheit von Feuchtigkeit mit ungesättigten (Meth)Acrylat- oder Säureanhydridgruppen reagieren. Hierzu gehören insbesondere primäre oder sekundäre Aminogruppen, die beispielsweise neben den blockierten Aminogruppen in der Komponente B) vorliegen können und auch alkoholische Hydroxylgruppen, die in der Komponente C) oder auch in der Komponente B) neben den blockierten Aminogruppen vorhanden sein können. Im allgemeinen sind jedoch alkoholische Hydroxylgruppen unter den Bedingungen des erfindungsgemäßen Verfahrens (Raumtemperatur) gegenüber ungesättigten (Meth)Acrylat- und Säureanhydridgruppen weitgehend inert, so daß die Hydroxylgruppen nur dann in Betracht gezogen werden müssen, wenn sie in Form von schwerflüchtigen Alkoholen zum Einsatz gelangen, die bei der Verwendung der erfindungsgemäßen Kombinationen nicht verdunsten und, beispielsweise bei höheren Temperaturen während des Aushärtens von Beschichtungen als Reaktionspartner für die Komponente A) in Betracht kommen.

Insbesondere, wenn als Komponente B) solche Verbindungen eingesetzt werden, die neben den blockierten Aminogruppen freie primäre oder sekundäre Aminogruppen aufweisen, entstehen bei der Herstellung der erfindungsgemäßen Bindemittel durch Abmischen der Einzelkomponenten komplexe Gemische, in denen Amidgruppen (durch Reaktion der Säureanhydridgruppen mit Aminogruppen) oder Aminogruppen (durch Reaktion von ungesättigten (Meth)acrylatgruppen mit Aminogruppen) vorliegen. Der Begriff "Bindemittel" umfaßt daher im Rahmen der Erfindung sowohl reine Gemische aus den Einzelkomponenten A) und B), sowie gegebenenfalls den übrigen Komponenten, in denen keine Umsetzungsprodukte der Einzelkomponenten vorliegen, als auch Systeme, in denen neben den Einzelkomponenten derartige Umsetzungsprodukte vorliegen, bzw. die im wesentlichen ausschließlich aus derartigen Umsetzungsprodukten bestehen. Bei allen Varianten der Herstellung der erfindungsgemäßen Bindemittel durch Abmischen der Einzelkomponenten werden Art und Mengenverhältnisse dieser Einzelkomponenten vorzugsweise so gewählt, daß das Molverhältnis von Säureanhydrid- und ungesättigten (Meth)Acrylatgruppen zu blockierten Aminogruppen nach Beendigung der gegebenenfalls spontan ablaufenden Reaktion zwischen Säureanhydrid- bzw. ungesättigten (Meth)Acrylatgruppen einerseits und primären bzw. sekundären Aminogruppen andererseits bei 0,2:1 bis 8:1 und insbesondere 0,5:1 bis 4:1 liegt, wobei auch hier ein Überschuß an Säureanhydrid- bzw. ungesättigten (Meth)Acrylatgruppen in Betracht gezogen werden sollte, falls Einzelkomponenten mitverwendet werden, die alkoholische Hydroxylgruppen aufweisen, die bei der erfindungsgemäßen Verwendung jedoch neben den blockierten Aminogruppen als Reaktionspartner für die Säureanhydrid-bzw. ungesättigten (Meth)Acrylatgruppen in Betracht kommen.

Unter "gegenüber Säureanhydrid- bzw. ungesätigten (Meth)acrylatgruppen reaktionsfähige Wasserstoffatome aufweisenden, blockierten Polyaminen B)" sind im Rahmen der Erfindung im übrigen nicht nur solche blockierte Polyamine der genannten Art zu verstehen, die reaktionsfähige Wasserstoffatome in chemisch gebundener Form enthalten, sondern vielmehr auch solche, die im Gemisch mit überschüssigem, zu ihrer Herstellung eingesetztem Polyamin bzw. Hydroxylamin vorliegen.

Bezüglich der Verwendbarkeit der erfindungsgemäßen Bindemittelkombinationen ist es weitgehend ohne Bedeutung, ob die gegebenenfalls spontan ablaufende Reaktion zwischen den Copolymerisaten A) und den gegenüber Säureanhydrid- bzw. ungesättigten (Meth)Acrylatgruppen reaktionsfähigen Gruppen bereits vollständig zum Abschluß gekommen ist. Gewünschtenfalls ist es jedoch möglich, diese Reaktion vor der erfindungsgemäßen Verwendung durch kurzzeitiges Erhitzen auf 40 bis 100 °C zum Abschluß zu bringen. Im übrigen erfolgt die Herstellung der erfindungsgemäßem Bindemittel vorzugsweise bei Raumtemperatur.

Die erfindungsgemäßen Bindemittel sind im allgemeinen (oftmals wegen des Vorliegens von Lösungsmitteln) bei Raumtemperatur flüssig, sie sind in Abwesenheit von Wasser ausreichend lagerstabil und härten nach Applikation auf ein Substrat in Gegenwart von Luftfeuchtigkeit im allgemeinen rasch aus.

In der Regel werden bereits bei Raumtemperatur vernetzte Filme erhalten. Die an sich schon sehr rasche Aushärtung kann durch Trocknung bei höheren Temperaturen noch weiter beschleunigt werden. Dabei sind Temperaturen von 80 bis 130 °C und Trocknungszeiten von 10 bis 30 Minuten vorteilhaft.

Bei Verwendung von besonders hydrolysestabilen blockierten Aminogruppen bzw. bei Mitverwendung von nicht flüchtigen mehrwertigen Alkoholen C) kann diese forcierte Trocknung bei höheren Temperaturen erforderlich sein, um das optimale Eigenschaftsbild zu erhalten.

Die die erfindungsgemäßen Bindemittel enthaltenden Beschichtungsmittel und Dichtmassen können die in der Lacktechnologie üblichen Hilfs- und Zusatzstoffe wie beispielsweise Pigmente, Füllstoffe, Verlaufshilfsmittel, Antioxidantien oder UV-Absorber enthalten.

Diese Hilfs- und Zusatzstoffe sollten möglichst wasserfrei sein und werden vorzugsweise bereits vor der Herstellung der Bindemittel den Ausgangskomponenten, im allgemeinen der Komponente A), einverleibt.

Die die erfindungsgemäßen Produkte als Bindemittel enthaltenden Lacke und Beschichtungsmassen weisen in Abwesenheit von Feuchtigkeit im allgemeinen eine Topfzeit von 1 bis 24 Stunden auf. Durch Auswahl geeigneter Reaktionspartner kann die Topfzeit jedoch beliebig nach oben oder unten korrigiert werden. Die Beschichtungsmittel (Lacke) und Dichtmassen können nach den üblichen Methoden, beispielsweise durch Spritzen, Streichen, Tauchen, Fluten, Gießen, Walzen, Spachteln auf beliebige, gegebenenfalls bereits vorbehandelte Untergründe wie z.B. Metall, Holz, Glas, Keramik, Stein, Beton, Kunststoffe, Textilien, Leder, Pappe oder Papier aufgetragen werden.

In den nachfolgenden Beispielen beziehen sich alle Prozentzahlen und -teile, falls nicht anders vermerkt, auf das Gewicht.

Beispiele

I) Allgemeine Herstellungsvorschrift für die Anhydridgruppen enthaltenden Copolymerisate $A'_1$ bis $A'_4$

In einem 4-l-Reaktionsgefäß mit Rühr-, Kühl- und Heizvorrichtungen wird Teil I vorgelegt und auf Reaktionstemperatur aufgeheizt. Dann werden parallel Teil II (Zugabe über einen Zeitraum von insgesamt 2,5 Stunden) und Teil III (Zugabe über einen Zeitraum von insgesamt 3 Stunden) zudosiert. Anschließend wird 2 Stunden bei der Reaktionstemperatur nachgerührt.

Die Reaktionstemperaturen und die Zusammensetzungen der Teile I bis III sind in Tabelle 1, zusammen mit den Kenndaten der erhaltenen Copolymerisate aufgeführt.

Tabelle 1

| (Mengenangaben in g) | | | | |
|---|---|---|---|---|
| Copolymerisate | $A'_1$ | $A'_2$ | $A'_3$ | $A'_4$ |
| Teil I | | | | |
| Butylacetat | 1020 | 1020 | 1020 | 1020 |
| Teil II | | | | |
| Butylacrylat | 732 | 476 | 549 | 604 |
| Methylmethacrylat | 476 | 732 | 549 | 604 |
| Styrol | 274 | 274 | 384 | 274 |
| Maleinsäureanhydrid | 275 | 275 | 275 | 275 |
| Teil III | | | | |
| tert.-Butylperoctoat (70 %ig) | 105 | 105 | 105 | 105 |
| Butylacetat | 118 | 118 | 118 | 118 |
| Reaktionstemperatur (°C) | 120 | 120 | 120 | 120 |
| Festgehalt (%) | 59,9 | 59,7 | 59,8 | 60,7 |
| Viskosität (mPa.s, 23 °C) | 2318 | 12630 | 6652 | 8173 |

II) Allgemeine Herstellvorschrift für die Umsetzung der anhydridfunktionellen Copolymerisate $A'_1$ bis $A'_4$ mit hydroxyl- oder aminofunktionellen ungesättigten (Meth)Acrylsäureestern zu den Komponenten $A_1$ bis $A_{13}$

In einem 1-l-Reaktionsgefäß mit Rühr-, Kühl- und Heizvorrichtung werden die in Tabelle 2 angegebenen Reaktionskomponenten vorgelegt und auf Reaktionstemperatur aufgeheizt. Danach wird 4 Stunden bei dieser Temperatur gerührt.

Tabelle 2 (Mengenangaben in g)

| Komponenten | $A_1$ | $A_2$ | $A_3$ | $A_4$ | $A_5$ | $A_6$ | $A_7$ | $A_8$ | $A_9$ | $A_{10}$ | $A_{11}$ | $A_{12}$ | $A_{13}$ |
|---|---|---|---|---|---|---|---|---|---|---|---|---|---|
| Copolymerisate | 600A'$_1$ | 600A'$_2$ | 600A'$_3$ | 600A'$_1$ | 600A'$_2$ | 600A'$_3$ | 600A'$_4$ | 600A'$_2$ | 600A'$_3$ | 600A'$_3$ | 600A'$_3$ | 600A'$_2$ | 600A'$_1$ |
| Hydroxyethylacrylat | 32 | 32 | 32 | | | | | | | | | | |
| Hydroxybutylacrylat | | | | 32 | | | | | | | 65 | | |
| Hydroxyethylmethacrylat | | | | | 22 | | | | | 44 | | | |
| Hydroxypropylmethacrylat | | | | | | 16 | | | | | | | |
| Glycerindimethacrylat | | | | | | | 25 | | | | | | |
| Diacrylat aus 4-fach ethoxyliertem Trimethylolpropan | | | | | | | | 70 | | | | | |
| Diacrylat aus 3-fach propoxyliertem Trimethylolpropan | | | | | | | | | 58 | | | 116 | |
| 2-tert.-Butylaminoethylmethacrylat | | | | | | | | | | | | | 31 |
| Hydrochinonmonomethylether | 0,6 | 0,6 | 0,6 | 0,6 | 0,4 | 0,3 | 0,6 | 0,6 | 0,4 | 0,7 | 1,0 | 0,8 | 0,3 |
| Butylacetat | 20 | 20 | 20 | 20 | 15 | 10 | 75 | 110 | 38 | 30 | 45 | 77 | 80 |
| Reaktionstemperatur(°C) | 125 | 125 | 125 | 125 | 125 | 125 | 125 | 125 | 125 | 125 | 125 | 125 | 100 |
| Anteil der umgesetzten Anhydridgruppen (%) | 50 | 50 | 50 | 40 | 30 | 20 | 20 | 30 | 25 | 60 | 80 | 50 | 50 |
| Festgehalt (%) | 59,8 | 59,6 | 50,2 | 59,2 | 59,5 | 59,6 | 55,3 | 55,5 | 59,5 | 59,8 | 59,3 | 60,2 | 55,6 |
| Viskosität (mPa.s,23°C) | 2837 | 8778 | 5630 | 2456 | 9031 | 5934 | 41205 | 1595 | 3055 | 6937 | 10920 | 5390 | 12005 |

III) Herstellung der zur Vernetzung befähigten Komponenten B)

$B_1$

In einem 2-l-Reaktionsgefäß mit Rühr-, Kühl- und Heizvorrichtung werden unter $N_2$-Atmosphäre 513 g Cyclohexan und 456 g Isobutyraldehyd vorgelegt. Bei 10 °C (Eisbadkühlung) werden 529,8 g 1-Amino-3-methyl-aminopropin zugetropft, 1 Stunde bei 10 °C gerührt und so lange auf Rückflußtemperatur erhitzt, bis kein Wasser mehr abgespalten wird, Anschließend werden Cyclohexan und überschüssiger Isobutyraldehyd abdestilliert und der Hexahydropyrimidinvernetzer $B_1$ erhalten.

$B_2$

In einem 3-l-Reaktionsgefäß mit Rühr-, Kühl- und Heizvorrichtung werden unter $N_2$-Atmosphäre 680 g Isophorondiamin, 1000 g Methylisobutylketon und 560 g Toluol so lange am Wasserabscheider unter Rückfluß erhitzt, bis die theoretische Wassermenge abgetrennt ist (144 g) bzw. bis sich kein Wasser mehr abscheidet. Anschließend werden Toluol und überschüssiges Methylisobutylketon abdestilliert und der Bisketiminvernetzer $B_2$ erhalten.

$B_3$

a) In einem 4-l-Reaktionsgefäß mit Rühr-, Kühl- und Heizvorrichtung werden unter $N_2$-Atmosphäre 1050 g Diethanolamin und 615 g Cyclohexan vorgelegt. Bei Raumtemperatur werden dann 1408 g 2-Ethylhexanal zugetropft, wobei die Temperatur langsam ansteigt. Es wird so lange bei Rückflußtemperatur gehalten, bis die Wasserabscheidung beendet ist. Anschließend werden Cyclohexan und überschüssiges 2-Ethylhexanal abdestilliert. Man erhält ein Oxazolan der Vorstufe $B_3$a).

b) Herstellung von $B_3$

In einem Reaktionsgefäß mit Rühr-, Kühl- und Heizvorrichtungen werden unter $N_2$-Atmosphäre 200,6 g eines Isocyanuratgruppen aufweisenden Polyisocyanats auf Basis von Hexamethylendiisocyanat, welches im wesentlichen aus N,N',N''-Tris-(6-isocyanatohexyl)-isocyanurat besteht und 207 g Butylacetat vorgelegt und auf 60 °C erwärmt. Nach dem Zutropfen von 286,7 g der Oxazolanvorstufe $B_3$a) wird noch 10 Stunden bei 70 °C gehalten, Man erhält eine 70 %ige Lösung des im statistischen Mittel 3 Oxazolangruppen enthaltenden Vernetzers $B_3$.

IV) Herstellung der erfindungsgemäßen Bindemittelkombinationen

Die Anhydrid- und ungesättigten (Meth)Acrylatgruppen enthaltenden Komponenten A) und die Polyaminkomponenten B) werden bei Raumtemperatur miteinander vermischt und gegebenenfalls durch Zugabe von weiteren Hilfsmitteln C) auf eine Verarbeitungsfähige Viskosität eingestellt.

Die Filme werden mit einem Filmzieher auf Prüfbleche aufgezogen, wobei die Naßfilmstärke 180 µm beträgt. Die bei Raumtemperatur aufgezogenen und gelagerten Filme waren alle nach spätestens 60 Minuten klebfrei durch-getrocknet, Nach Alterung, d.h. 24 Stunden Raumtemperatur erhält man klare, vernetzte, lösungsmittelbeständige Filme mit hervorragender Filmmechanik und guter Filmoptik.

Die angesetzten Lackmischungen wiesen durchweg eine Standzeit von mehreren Stunden auf.

In der folgenden Tabelle 3 werden die Zusammensetzungen der Bindemittelkombinationen und die Lösungsmittelfestigkeiten als Grad der Vernetzung aufgeführt.

Die Lösungsmittelfestigkeit wird durch einen Wischtest mit einem Methylisobutylketon (MIBK)-getränkten Wattebausch geprüft, Angegeben wird die Zahl der Doppelhübe, nach denen der Film ohne sichtbare Veränderung bleibt. Mehr als 200 Doppelhübe pro Film wurden nicht durchgeführt.

**Tabelle 3**

| Verwendungsbeispiel | 1 | 2 | 3 | 4 | 5 | 6 | 7 | 8 |
|---|---|---|---|---|---|---|---|---|
| Komponente A) | 50 g $A_1$ | 50 g $A_2$ | 50 g $A_3$ | 50 g $A_4$ | 50 g $A_5$ | 50 g $A_6$ | 50 g $A_7$ | 50 g $A_8$ |
| Komponente B) | 24 g $B_3$ | 24 g $B_3$ | 24 g $B_3$ | 24 g $B_3$ | 24 g $B_3$ | 25 g $B_3$ | 26 g $B_3$ | 25,5 g $B_3$ |
| Butylacetat | 40 g | 40 g | 40 g | 40 g | 40 g | 40 g | 40 g | 40 g |
| Standzeit | >4 h | >4 h | >4 h | >4 h | >4 h | >4 h | >3 h | >3 h |
| MIBK-Wischtest nach 24 h Raumtemperatur Anzahl der Doppelhübe | >200 | >200 | >200 | >200 | >200 | >200 | >200 | >200 |
| Molverhältnis (Anhydrid und unges. (Meth)Acrylatgruppen): NH (nach hydrolytischer Freisetzung) | 1:1 | 1:1 | 1:1 | 1:1 | 1:1 | 1:1 | 1:1 | 1:1 |

**Tabelle 3**

| Verwendungsbeispiel | 9 | 10 | 11 | 12 | 13 | 14 | 15 |
|---|---|---|---|---|---|---|---|
| Komponente A) | 50 g $A_9$ | 50 g $A_{10}$ | 50 g $A_{11}$ | 50 g $A_{12}$ | 50 g $A_1$ | 50 g $A_3$ | 50 g $A_4$ |
| Komponente B) | 29 g $B_3$ | 24 g $B_3$ | 23 g $B_3$ | 21 g $B_3$ | 7,4 g $B_2$ | 7,4 g $B_2$ | 7,4 g $B_2$ |
| Butylacetat | 40 g | 40 g | 40 g | 40 g | 30 g | 30 g | 30 g |
| Standzeit | >3 h | >4 h | >4 h | >3 h | >4 h | >4 h | >4 h |
| MIBK-Wischtest nach 24 h Raumtemperatur Anzahl der Doppelhübe | >200 | >200 | >200 | >200 | >200 | >200 | >200 |
| Molverhältnis (Anhydrid und unges. (Meth)Acrylatgruppen): NH (nach hydrolytischer Freisetzung) | 1:1 | 1:1 | 1:1 | 1:1 | 1:1 | 1:1 | 1:1 |

**Tabelle 3**

| Verwendungsbeispiel | 16 | 17 | 18 | 19 | 20 | 21 | 22 |
|---|---|---|---|---|---|---|---|
| Komponente A) | 50 g $A_6$ | 50 g $A_7$ | 50 g $A_{11}$ | 50 g $A_3$ | 50 g $A_6$ | 50 g $A_{10}$ | 50 g $A_{13}$ |
| Komponente B) | 7,6 g $B_2$ | 8,0 g $B_2$ | 7,0 g $B_2$ | 3,2 g $B_1$ | 3,2 g $B_1$ | 3,2 g $B_1$ | 2,9 g $B_1$ |
| Butylacetat | 30 g | 30 g | 30 g | 25 g | 25 g | 25 g | 25 g |
| Standzeit | >4 h | >3 h | >4 h | >4 h | >4 h | >4 h | >4 h |
| MIBK-Wischtest nach 24 h Raumtemperatur Anzahl der Doppelhübe | >200 | >200 | >200 | >200 | >200 | >200 | >200 |
| Molverhältnis (Anhydrid und unges. (Meth)Acrylatgruppen): NH (nach hydrolytischer Freisetzung) | 1:1 | 1:1 | 1:1 | 1:1 | 1:1 | 1:1 | 1:1 |

## Patentansprüche

1. Bindemittel für unter dem Einfluß von Feuchtigkeit aushärtbare Beschichtungsmittel oder Dichtmassen, dadurch gekennzeichnet, daß es

A) 30 bis 99 Gew.-Teile einer Copolymerisat-Komponente, bestehend aus mindestens einem modifizierten Copolymerisat mit einem als Gewichtsmittel bestimmten Molekulargewicht von 1500 bis 75 000 von olefinisch ungesättigten Verbindungen, welches als gegenüber Aminogruppen reaktionsfähige Gruppen sowohl

(i) intramolekulare Carbonsäureanhydridgruppen als auch

(ii) olefinisch ungesättigte (Meth)Acrylatgruppen

in chemisch gebundener Form enthält, wobei das Anhydridäquivalentgewicht bei 392 bis 9800 und das (Meth)Acrylat-Äquivalentgewicht bei 284 bis 7100 liegt,

B) 1 bis 70 Gew.-Teile einer Polyaminkomponente, bestehend aus mindestens einem organischen Polyamin mit blockierten Aminogruppen, welche mit Wasser unter Freisetzung von primären oder sekundären Aminogruppen reagieren,

sowie gegebenenfalls

C) Hilfs- und Zusatzmittel

enthält, wobei Art und Mengenverhältnisse der Komponenten A) und B) im übrigen so ausgewählt sind, daß auf jede blockierte Aminogruppe der Komponente B) insgesamt 0,2 bis 8 Anhydrid- und ungesättigte (Meth)Acrylatgruppen der Komponente A) entfallen.

**2.** Bindemittel gemäß Anspruch 1, dadurch gekennzeichnet, daß das in der Komponente A) vorliegende Copolymerisat hergestellt worden ist, indem man

in einem ersten Reaktionsschritt

a) 5 bis 30 Gew.-Teile copolymerisierbare, anhydridfunktionelle Monomere

und

b) 70 bis 95 Gew.-Teile sonstige copolymerisierbare Monomere der allgemeinen Formeln (I), (II), (III)

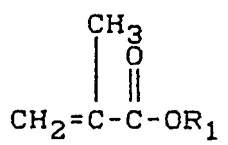

(I)

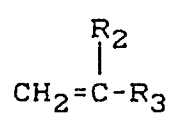

(II)

und/oder

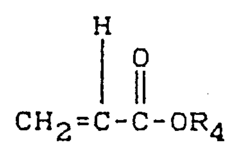

(III)

wobei

$R_1$ für einen linearen oder verzweigten aliphatischen Kohlenwasserstoffrest mit 1 bis 18 Kohlenstoffatomen steht,

$R_2$ für Wasserstoff, eine Methyl-, Ethyl-, Chlor- oder Fluorgruppe steht,

$R_3$ für einen aromatischen Kohlenwasserstoffrest mit 6 bis 12 Kohlenstoffatomen, eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff, gegebenenfalls Etherbrücken aufweisende, Alkylsubstituenten mit 1 bis 6 Kohlenstoffatomen tragen, steht, und

$R_4$ bezüglich seiner Bedeutung der für $R_1$ gemachten Definition entspricht, jedoch mit $R_1$ nicht identisch sein muß,

durch radikalisch initiierte Copolymerisation in ein anhydridfunktionelles Copolymerisat überführt

und in einem zweiten Reaktionsschritt

das so erhaltene Copolymerisat durch Reaktion mit, bezogen auf die einpolymerisierten Anhydridgruppen unteräquivalenten Menge an hydroxyl- oder aminofunktionellen (Meth)Acrylsäureestern modifiziert.

**3.** Bindemittel gemäß Anspruch 1 dadurch gekennzeichnet, daß die Komponente B) aus Aldimin-, Ketimin-, Oxazolan-, Hexahydropyrimidin- und/oder Tetrahydroimidazolgruppen aufweisenden Verbindungen besteht.

**4.** Verwendung der Bindemittel gemäß Anspruch 1 bis 3 als oder in, unter dem Einfluß von Feuchtigkeit aushärtbaren, Beschichtungsmitteln oder Dichtmassen.

## Claims

**1.** A binder for moisture-curing coating compositions or sealing compounds, characterized in that it contains

A) 30 to 99 parts by weight of a copolymer component consisting of at least one modified copolymer with a weight average molecular weight of 1,500 to 75,000 of olefinically unsaturated compounds containing both

(i) intramolecular carboxylic anhydride groups and

(ii) olefinically unsaturated (meth)acrylate groups

in chemically bound form as groups reactive to amino groups, the anhydride equivalent weight being in the range from 392 to 9,800 and the (meth)acrylate equivalent weight being in the range from 284 to 7,100,

B) 1 to 70 parts by weight of a polyamine component consisting of at least one organic polyamine with blocked amino groups which react with water with release of primary or secondary amino groups

and optionally

C) auxiliaries and additives,

the nature of and quantitative ratios between components A) and B) being selected so that, for every blocked amino group of component B), there are in all 0.2 to 8 anhydride and unsaturated (meth)-acrylate groups of component A).

**2.** A binder as claimed in claim 1, characterized in that the copolymer present in component A) has been produced as follows:

in a first reaction step

a) 5 to 30 parts by weight copolymerizabie, anhydride-functional monomers

and

b) 70 to 95 parts by weight of other copolymerizable monomers corresponding to general formulae (I) (II), (III)

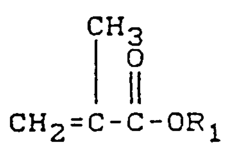

(I)

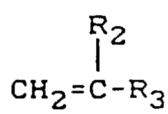

(II)

and/or

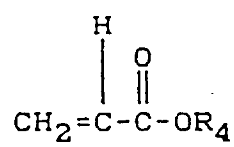

(III)

in which

$R_1$ is a linear or branched aliphatic hydrocarbon radical containing from 1 to 18 carbon atoms,

$R_2$ is hydrogen, a methyl group, an ethyl group, a chlorine or fluorine atom,

$R_3$ is an aromatic hydrocarbon radical containing 6 to 12 carbon atoms, a nitrile group, a carboxylate group containing 2 to 9 carbon atoms, an alkoxy group containing 2 to 7 carbon atoms or an aminocarbonyl group optionally bearing $C_{1-6}$ alkyl substituents - optionally containing ether bridges - at the nitrogen atom, and

$R_4$ corresponds in its meaning to the definition given for $R_1$, but need not be identical with $R_1$,

are converted by radical-initiated copolymerization into an anhydride-functional copolymer

and, in a second reaction step,

the copolymer thus obtained is modified by reaction with - based on the copolymerized anhydride groups - a less than equivalent quantity of hydroxyl- or aminofunctional (meth)-acrylates.

**3.** A binder as claimed in claim 1, characterized in that component B) consists of compounds containing aldimine, ketimine, oxazolane, hexahydropyrimidine and/or tetrahydroimidazole groups.

**4.** The use of the binder claimed in claims 1 to 3 as, or in, moisture-curing coating compositions or sealing compounds.

## Revendications

**1.** Liant pour des agents d'enduction ou des matières d'étanchéification durcissables sous l'influence de l'humidité, caractérisé en ce qu'il contient

A) de 30 à 99 parties en poids d'un composant de copolymère constitué par au moins un copolymère modifié de composés à insaturation oléfinique, ayant un poids moléculaire de 1500 à 75.000 déterminé comme moyenne pondérale, qui contient, comme groupes aptes à réagir vis-à-vis de groupes amino, aussi bien

(i) des groupes intramoléculaires d'anhydrides carboxyliques que

(ii) des groupes (méth)acrylate à insaturation oléfinique,

sous forme liée par voie chimique, dans lequel le poids d'équivalent anhydride se situe de 392 à 9800 et le poids d'équivalent (méth)acrylate se situe de 284 à 7100,

B) de 1 à 70 parties en poids d'un composant de polyamine constitué par au moins une polyamine organique contenant des groupes amino bloqués qui réagissent avec l'eau en libérant des groupes amino primaires ou secondaires,

ainsi que, éventuellement,

C) des agents auxiliaires et des additifs,

dans lequel, le type et les proportions des composants A) et B) sont par ailleurs sélectionnés de telle sorte que, pour chaque groupe amino bloqué du composant B), on obtient au total de 0,2 à 8 groupes anhydride et (méth)acrylate insaturés du composant A).

**2.** Liant selon la revendication 1, caractérisé en ce qu'on prépare le copolymère présent dans le composant A) en transférant, dans une première étape réactionnelle,

a) de 5 à 30 parties en poids de monomères copolymérisables anhydride-fonctionnels,

et

b) de 70 à 95 parties en poids d'autres monomères copolymérisables répondant aux formules générales (II), (II), (III)

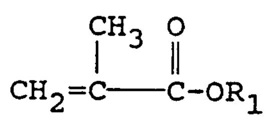

(I)

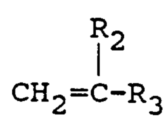

(II)

et/ou

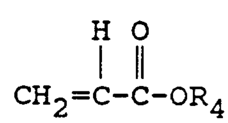

(III)

dans lesquelles

- $R_1$ représente un radical d'hydrocarbure aliphatique linéaire ou ramifié contenant de 1 à 18 atomes de carbone,
- $R_2$ représente un atome d'hydrogène, un groupe méthyle, un groupe éthyle, un atome de chlore ou un atome de fluor,
- $R_3$ représente un radical d'hydrocarbure aromatique contenant de 6 à 12 atomes de carbone, un groupe nitrile, un groupe carboxylate contenant de 2 à 9 atomes de carbone, un groupe alcoxy contenant de 2 à 7 atomes de carbone ou encore un groupe aminocarbonyle qui porte éventuellement sur l'atome d'azote des substituants alkyle présentant éventuellement des ponts éther et contenant de 1 à 6 atomes de carbone, et
- $R_4$ correspond, quant à sa signification, à la définition donnée pour $R_1$, sans toutefois devoir être identique à $R_1$,

en un copolymère anhydride-fonctionnel par copolymérisation à déclenchement radicalaire,

et, dans une seconde étape réactionnelle,

on modifie le copolymère ainsi obtenu par mise en réaction avec, rapportées aux groupes anhydride incorporés par copolymérisation, des quantités sous-équivalentes d'esters (méth)acryliques hydroxy- ou amino-fonctionnels.

**3.** Liant selon la revendication 1, caractérisé en ce que le composant B) est constitué par des composés présentant des groupes aldimine, cétimine, oxazolane, hexahydropyrimidine et/ou tétrahydroimidazole.

4. Utilisation des liants selon les revendications 1 à 3, comme agents d'enduction ou matières d'étanchéification durcissables sous l'influence de l'humidité, ou dans ces derniers.